# EUROPÄISCHE PATENTSCHRIFT

(11) **EP 0 775 242 B1**
(45) Veröffentlichungstag und Bekanntmachung des Hinweises auf die Patenterteilung: **24.03.1999**
(21) Anmeldenummer: 95929040.4
(22) Anmeldetag: 02.08.1995
(51) Int. Cl.: E05F 15/16, E05F 11/48

(54) **MOTORISCH ANGETRIEBENER FENSTERHEBER**
MOTOR-DRIVEN WINDOW LIFTER
LEVE-VITRE A MOTEUR

(30) Priorität: 10.08.1994 DE 4428262
(43) Veröffentlichungstag der Anmeldung: 28.05.1997
(73) Patentinhaber: Brose Fahrzeugteile GmbH & Co. KG, 96450 Coburg (DE)
(72) Erfinder: SESSELMANN, Helmut, D-96523 Steinach (DE); RAMPEL, Hans, D-96482 Ahorn (DE); ROSS, Steffen, D-96515 Sonneberg (DE)
(74) Vertreter: Müller, Wolfram Hubertus, Dipl.-Phys.
(86) Internationale Anmeldenummer: EP9503058
(87) Internationale Veröffentlichungsnummer: WO9605398

(56) Entgegenhaltungen:
- EP-A- 0 490 341
- EP-A- 0 653 538
- DE-A- 4 008 229
- DE-C- 3 615 578
- US-A- 4 389 818
- US-A- 4 644 694
- US-A- 4 970 827

## Beschreibung

Die Erfindung betrifft einen motorisch angetriebenen Fensterheber für Kraftfahrzeuge gemäß dem Oberbegriff des Patentanspruchs 1.

Ein gattungsgemäßer Fensterheber ist aus der US-A-4 970 827 bekannt. Diese beschreibt einen Seilfensterheber mit einer an der Unterkante der Fensterscheibe befestigten Montageschiene, die die Antriebseinheit, bestehend aus Elektromotor und Getriebe mit mehrstufiger Seiltrommel zum Aufwikkeln mehrerer Seile, trägt. Weiterhin sind in den äußeren Bereichen der Montageschiene Seilumlenkrollen vorgesehen, über welche jeweils ein Seil zwischen seinem ersten Befestigungspunkt nahe der oberen Kante des Türschachts und seinem zweiten Befestigungspunkt an der Seiltrommel geführt ist. Ein drittes Seil, das ebenfalls mit einem Bereich der Seiltrommel in Verbindung steht, ist mit dem anderen Ende in der Nähe des Türbodens unter Zwischenschaltung einer Zugfeder befestigt.

Wird die Seiltrommel nun in die eine Drehrichtung versetzt, in der sich die beiden im oberen Bereich der Tür befestigten Seile verkürzen und somit die Fensterscheibe anheben, so wird das unten eingehängte Seil im gleichen Maße abgewikkelt und somit verlängert. In der umgekehrten Drehrichtung verlängern sich die beiden oberen Seile und die Fensterscheibe senkt sich, während sich das untere Seil verkürzt.

Der in dieser Druckschrift beschriebene Fensterheber weist nachteilig einen komplizierten konstruktiven Aufbau auf, da zum Verstellen der Fensterscheibe insgesamt drei Seile erforderlich sind, die an insgesamt drei Befestigungsstellen in der Türkarosserie befestigt sind. Aufgrund der zahlreichen Einzelteile ist der bekannte Fensterheber darüberhinaus teuer und nur schwer zu montieren. Auch wird durch die Verwendung von drei Seilen ein großer Bauraum in Anspruch genommen.

Aus der DE 12 44 610 ist ein elektrisch angetriebener Fensterheber bekannt, der die Absenkung der Fensterscheibe eines Kraftfahrzeugs entlang einer gekrümmten Bahn ermöglicht. Dabei greifen Führungsrollen, die in der Nähe der unteren Eckbereiche der Fensterscheibe angeordnet sind, in das Profil der ihnen zugeordneten Führungsschienen ein. Eine weitere (dritte) Führungsschiene befindet sich im mittleren Türbereich und trägt eine Zahnstange, welche mit der Verzahnung des Abtriebsritzels einer Motor-Getriebeeinheit im Eingriff steht. Da auch die zuletzt genannte Führungsschiene gekrümmt ausgebildet ist, muß die Motor-Getriebeeinheit beim Heben und Senken der Fensterscheibe an der Scheibenunterkante eine translatorische Bewegung ausführen. Gewährleistet wird dies durch eine mit der Scheibenunterkante verbundene Gleitschiene.

Der beschriebene Fensterheber besitzt mit seinen drei Führungsschienen und der Gleitschiene für die Motor-Getriebeeinheit einen relativ aufwendigen Aufbau. Auch die Konstruktion der mittleren Führungsschiene mit der Zahnstange an einem Profilschenkel und der Gleitkante am anderen Profilschenkel ist für eine effektive Fertigung wenig geeignet. Für die die Motor-Getriebeeinheit tragende Gleitschiene besteht bei ungünstigen Witterungsverhältnissen eine hohe Vereisungsgefahr, was eine Betätigung der Fensterscheibe verhindern könnte.

Aus der US-PS 4,389,818 ist ein elektrisch angetriebener Fensterheber bekannt, dessen Antriebseinheit an der Scheibenunterkante montiert ist. Entlang des Verschiebeweges erstreckt sich ein zwischen dem Türboden und der Türbrüstung gespannter flexibler Kunststoffriemen. Er trägt Verzahnungselemente, in die ein Ritzel oder dergleichen eingreift. Zur Gewährleistung eines permanenten Eingriffs der Verzahnungen sind Führungsbacken beziehungsweise Führungsrollen vorgesehen, die jedoch wegen der zusätzlichen Reibung den Wirkungsgrad des Antriebes verschlechtern. Ein weiterer Nachteil besteht darin, daß der Kunststoffriemen wegen den extremen thermischen und dynamischen Wechselbelastungen einem relativ hohen Verschleiß unterliegt.

Ein weiteres Fensterhebersystem mit einem an der Scheibenunterkante gelagerten Motor und einer schräg in der Tür angeordneten Antriebsstange zeigt JP 4-155 083 A. Die Stromzuführung ist als schraubenförmiges Kabel dargestellt, das sich vom Motor in einen unteren Eckbereich der Tür erstreckt.

Beim Verfahren der Fensterscheibe zwischen ihrem oberen und ihrem unteren Anschlag überstreicht das Kabel einen großen Bereich der Türfläche, so daß relativ viel Platz für das Kabel freigehalten werden muß. Außerdem können beim Türzuschlagen unerwünschte Geräusche von den nicht fixierten Bereichen des Kabels hervorgerufen werden.

Die DE 40 26 214 A1 und die EP 0 490 341 A1 beschreiben Antriebsvorrichtungen unter Verwendung von Spindeln, die ebenfalls eine kompakte Bauweise erlaubt, ist der Motor in unmittelbarer Nähe des Bodens der Fahrzeugtüre angeordnet. Als nachteilig muß der schlechte Wirkungsgrad von Spindelantrieben angesehen werden. Bei Verwendung stark gewölbter Fensterscheiben müssen teure biegeelastische Spindeln zum Einsatz kommen. Die mit Spindelantrieben verbundenen Geräuschprobleme sind oft nur schwer beherrschbar. Desweiteren sind separate Führungsmittel für die Fensterscheibe erforderlich, da die Spindel selbst keine Führungsaufgaben übernehmen kann.

Der Erfindung liegt die Aufgabe zugrunde, einen kostengünstig herstellbaren, aus nur wenigen Einzelteilen bestehenden Fensterheber zur Verfügung zu stellen, der über einen hohen Wirkungsgrad verfügt, nur wenig Bauraum in Anspruch nimmt und insbesondere leicht zu montieren ist.

Die Aufgabe wird durch einen Fensterheber mit den Merkmalen des Anspruchs 1 gelöst. Bevorzugte und vorteilhafte Ausgestaltungen der Erfindung sind in den abhängigen Ansprüchen angegeben.

Durch Verwendung eines in zwei Abschnitte unterteilten, formschlüssig mit der Seiltrommel verbundenen Seils als Zugmittel wird ein Fensterheber mit vergleichsweise wenig Einzelteilen und aufgrund verringerter Reibungsverluste einem hohen Wirkungsgrad zur Verfügung gestellt. Das in zwei Abschnitte unterteilte, mit seinen inneren Enden durch formschlüssige Einhängungen rutschfest auf der Seiltrommel lagernde Seil verhindert einen Schlupf zwischen dem Seil und der Seiltrommel, so daß ein sicherer und präziser Betrieb gewährleistet ist.

Die Anordnung der Befestigungsstellen der Seilabschnitte an einer modularen Einheit bringt den Vorteil mit sich, daß gesondert herstellbare und vorprüfbare technische Einheiten geschaffen werden, die in einfacher Weise in die Fahrzeugtür einbaubar sind. Die Prüfbarkeit und die Montage des Fensterhebers werden dadurch wesentlich vereinfacht und die Kosten gesenkt.

Im Vergleich mit herkömmlichen Seil- oder Bowdenzug-Fensterhebern mit umlaufenden Seilschlaufen hat sich nicht nur die Anzahl der Bauteile verringert, auch die Länge des zu verwendenden Seiles hat sich erheblich reduziert, wodurch sich wiederum das Gewicht verringert.

Die erfindungsgemäßen Fensterheber können besonders kostengünstig hergestellt werden. Ihre kompakte, platzsparende Bauweise gewährleistet vielfältige Anwendungsmöglichkeiten. Auch für die außenliegende Konstruktionsweise, bei der der Fensterheber zwischen der Fenterscheibe und der Türaußenhaut angeordnet ist, eignet sich die erfindungsgemäße Lösung.

In einer bevorzugten Ausführungsform der Erfindung ist die modulare Einheit eine Führungsschiene, an dessen Enden die Befestigungsstellen des Seils vorgesehen sind. Die Führungsschiene ist dabei hinreichend steif ausgebildet.

Alternativ ist die modulare Einheit ein Türmodul, ein Aggregateträger oder ein anderer in die Karosserie, insbesondere die Türkarosserie eines Kraftfahrzeuges, einzubauender Träger. Das Seil ist dabei auf dem Türmodul oder dem Aggregatträger gespannt. Das Türmodul oder der Aggregateträger werden als solche in die Karosserie des Fahrzeuges in einfacher Weise montiert. Der Einsatz der Erfindung in Verbindung mit einem Türmodul, das mehrere Aufgaben funktionell verschiedener Baugruppen in sich vereinigt, ist besonders vorteilhaft.

Eine weitere Erfindungsvariante sieht die schaffung eines doppelsträngigen Fensterhebers durch Kombination von zwei eingangs beschriebenen einsträngigen Fensterhebern vor, wobei jeder Strang seine eigene, separate Antriebseinheit aufweist. Die Antriebseinheiten werden von einer gemeinsamen elektronischen Steuereinheit angesteuert, so daß entsprechend dem vorgewählten Programm an den Stellen der beiden Zugmittel unterschiedlich große versteilgeschwindigkeiten bzw. Hublänger erzeugt werden können. Dies ist vor allem beim Verstellen stark sphärisch gekrümmter Fensterscheiben von Vorteil, weil ihre unterschiedlichen Krümmungsradien unterschiedliche Hublängen erfordern. Natürlich werden die beiden Antriebseinheiten, die sich die Verstellbelastung teilen, in ihrer Dimensionierung auf das notwendige Maß zurückgeführt, wodurch der in der Nähe des Türschachts knappe Raum besser ausgenutzt werden kann.

Nachfolgend wird die Erfindung anhand von Ausführunsbeispielen sowie den dargestellten Figuren näher erläutert. Es zeigen:
- Figur 1 -: einen Fensterheber mit einem in der Kraftfahrzeugtür eingespannten, eine Seiltrommel umschlingenden Seil;
- Figur 2 -: einen Fensterheber gemäß der Erfindung mit einem zwischen den Enden einer Führungsschiene eingespannten Seil;
- Figur 3 -: einen Fensterheber gemäß der Erfindung mit einem auf einem Türmodul gespannten Seil und im Türmodul integrierten Führungsschienen;

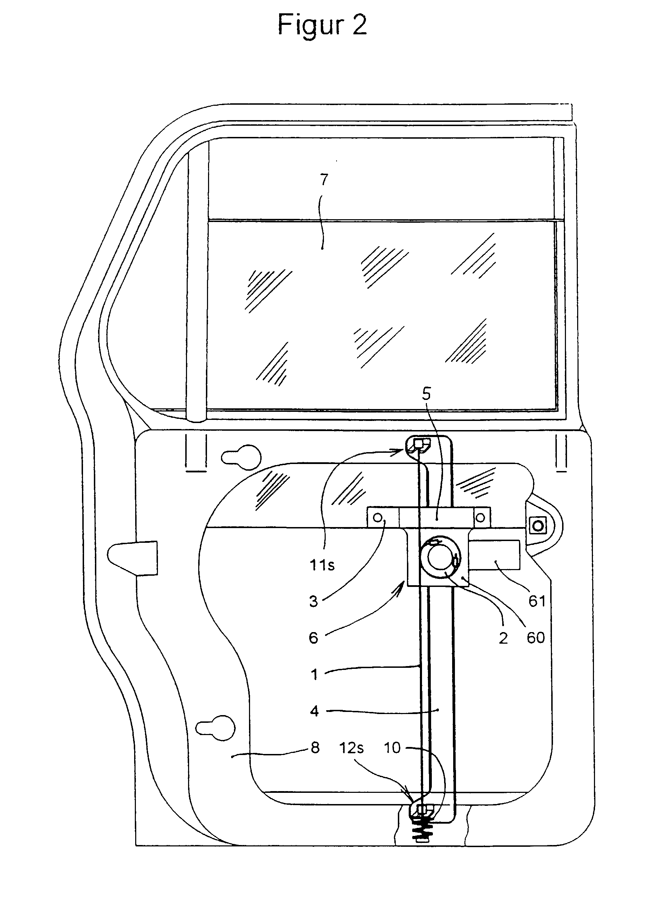

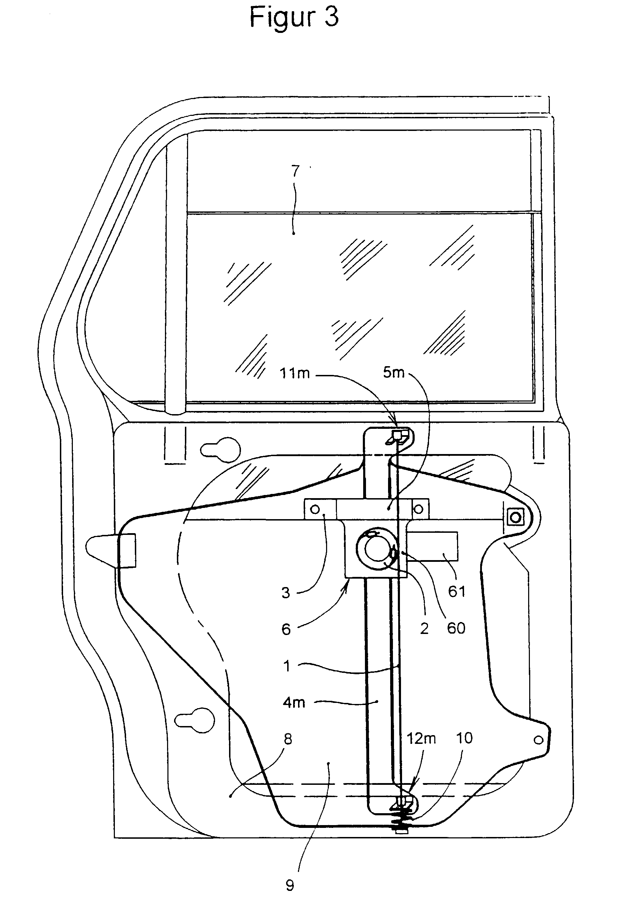

Einsträngige Ausführungsvarianten der Erfindung sind in den Figuren 2 und 3 dargestellt. Sie eignen sich vor allem zur Betätigung der kleineren Fond-Fensterscheiben, da diese weniger zum Verkippen neigen als die großen Fensterscheiben in den vorderen Türen. Wenn die großen Fensterscheiben nicht hinreichend durch karosserieseitige Scheibenführungen stabilisiert sind, dann muß diese Funktion durch den Fensterheber erfüllt werden. Dazu wird parallel zum Zugmittel (z.B. Seil) eine Führungsschiene angeordnet. In der zweisträngigen Ausführungsvariante wird das Verstellsystem um ein weiteres Zugmittel mit Antriebseinheit und ggf. eine weitere Führungsschiene erweitert.

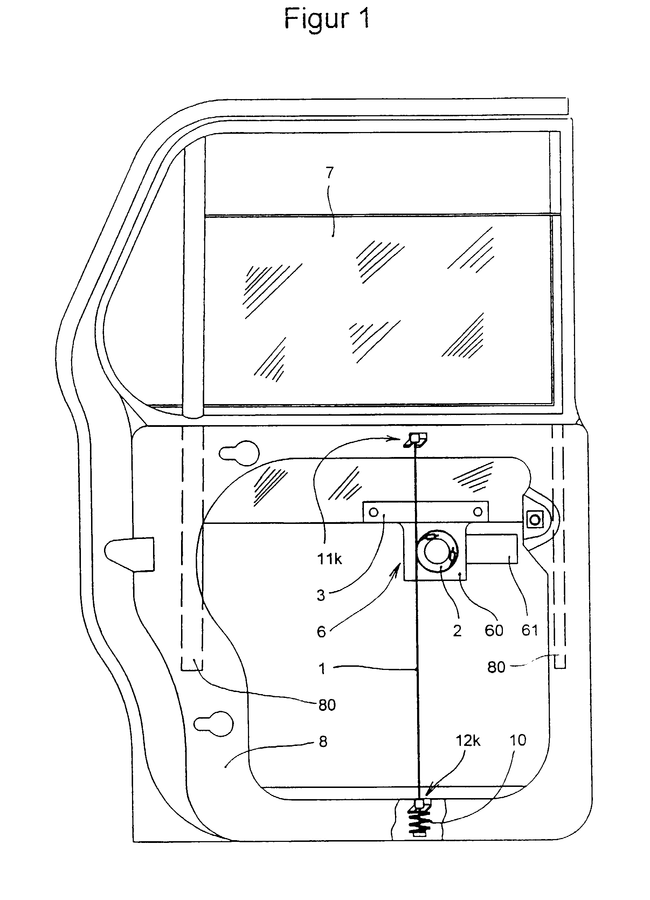

Figur 1 zeigt zunächsteinen einsträngigen Fensterheber in der Türkarosserie 8 der Fondtür eines Kraftfahrzeugs. Die Fensterscheibe 7 ist in Scheibenführungen 80, die tief in den Türschacht hineinreichen, verschiebbar gehalten. Deshalb werden an den Fensterheber keine Führungseigenschaften gestellt, so daß auf eine Führungsschiene verzichtet werden kann.

Das als Seil ausgebildete Zugmittel 1 ist im oberen Bereich der Türkarosserie 8 in der Befestigungsstelle 11k eingehängt und erstreckt sich zur unteren Befestigungsstelle 12k, mit der eine dem unteren Seilende vorgeschaltete Zugfeder 10 zum Ausgleich von Toleranzen und Seillängungen befestigt ist. Das Seil 1 umschlingt eine Seiltrommel 2 (Wickelelement), die das abtriebseitige Getriebeelement des Getriebes 60 bildet. Im oberen Bereich des Getriebes 60 sind einstückig Scheibenhalter 3 angeformt, womit die Antriebseinheit 6 an der Unterkante der Fensterscheibe 7 und weitestgehend unterhalb ihres Schwerpunkts befestigt ist. Die Antriebskraft wird von einem Elektromotor 61 erzeugt.

Dreht sich die Seiltrommel in die eine Drehrichtung, so windet sich der Antrieb 6 entlang des gespannten Seils in die eine Richtung und bei Drehrichtungsumkehr in die andere Richtung, wobei die Fensterscheibe entsprechend mitgenommen wird. Um Schlupf zwischen dem Seil 1 und der Seiltrommel 2 zu vermeiden, sollte das Seil 1 aus zwei Teilen bestehen, deren nach innen gerichtete Enden (nicht dargestellt) an der Seiltrommel 2 zu befestigen sind. Dadurch wird aber auch erforderlich, daß beide Teile des Seils 1 die gesamte Hublänge bevorraten.

Da das Zugmittel 1 direkt in der Türkarosserie 8 zwischen zwei Befestigungsstellen gespannt ist, kann es von Vorteil sein, bestimmte Bereiche der Türkarosserie zu verstärken, damit die während des Verstellbetriebes auftretenden Kräfte problemlos übertragen werden können.

Figur 2 zeigt eine Fahrzeugkarosserie 8, die keine weit in den Türschacht reichenden Scheibenführungen aufweist, um eine gute Zugänglichkeit zum Schloß- und Scharnierbereich zu gewährleisten. Die Führungsfunktion muß deshalb von einer Führungsschiene 4 übernommen werden, die in die Türkarosserie 8 montiert wird. An den Enden der Führungsschiene 4 sind Befestigungsstellen 11s, 12s vorgesehen, zwischen denen das Zugmittel 1 (Seil) und die Feder 10 gespannt sind. Ein vorzugsweise im Gehäuse des Getriebes 60 integrierter Mitnehmer lagert verschieblich auf der Führungsschiene 4. Der Vorteil dieser Ausführungsform besteht in der sehr kompakten, nur wenige Teile aufweisenden Baueinheit. In Kombination mit einem sich mit der Scheibenunterkante selbstverriegelnden Scheibenhalter 3 erfordert der Einbau des Verstellsystems nur noch wenige Handgriffe.

Die Variante von Figur 3 unterscheidet sich von der gemäß Figur 2 nur durch die Verwendung eines Türmoduls 9, das schematisch angedeutet wurde. Aus ihm ist die Führungsschiene 4m herausgeformt oder als separates Teil mit dem Türmodul 9 verbunden und führt den Mitnehmer 5m einschließlich der mit der Fensterscheibe 7 verbundenen Antriebseinheit 6 entlang des Verstellweges. Das Seil 1 ist ebenfalls zwischen den auf dem Türmodul 9 vorgesehenen Befestigungsstellen 11m,12m gespannt. Das Türmodul 9 könnte außerdem die Fensterscheibe 7 tragen und so eine voll vorprüfbare Einheit bilden.

In Verbindung mit einem System zur Positionerkennung der Fensterscheibe 7 können die gewünschten Hublängen bzw. Hubgeschwindigkeiten allein aufgrund der Vorgaben der Software realisiert werden. Eine Anpassung an die Anforderungen einer anderen Fahrzeugtür läßt sich leicht über die Elektronik vornehmen.

### Bezugszeichenliste

- 1 -: Zugmittel (Seil)

- 10 -: Feder
- 11k -: Befestigungsstelle (oben, an Türkarosserie)
- 11s -: Befestigungsstelle (oben, an Führungsschiene)
- 11m -: Befestigungsstelle (oben, an Türmodul)
- 12k -: Befestigungsstelle (unten, an Türkarosserie)
- 12s -: Befestigungsstelle (unten, an Führungsschiene)
- 12m -: Befestigungsstelle (unten, an Türmodul)

- 2 -: Wickelelement (Seiltrommel)

- 3 -: Scheibenhalter

- 4 -: Führungsschiene
- 4m -: Führungsschiene (im Türmodul integriert)

- 5 -: Mitnehmer
- 5m -: Mitnehmer

- 6 -: Antriebseinheit

- 60 -: Getriebe
- 61 -: Motor

- 7 -: Fensterscheibe
- 8 -: Türkarosserie
- 80 -: Scheibenführung

- 9 -: Türmodul (-Grundplatte)

## Patentansprüche

1. Motorisch angetriebener Fensterheber für Kraftfahrzeuge bestehend aus einer weitestgehend unterhalb des Scheibenschwerpunktes an der Fensterscheibe befestigten Antriebseinheit (6a, 6b, 6aa, 6bb) mit Elektromotor und Getriebe, wobei das Getriebe eine drehbare Seiltrommel (2) aufweist, die in Wirkungsverbindung mit einem Zugmittel (1a, 1b) steht, so daß sich je nach Drehrichtung der Seiltrommel (2) die Fensterscheibe mit der Antriebseinheit entlang des Verschiebeweges nach unten oder oben bewegt, und daß das Zugmittel zwischen bezüglich der Türkarosserie ortsfesten Befestigungsstellen (11m, 12m; 11s, 12s) eingespannt ist, wobei zum Ausgleich von Seillängungen und Fertigungstoleranzen wenigstens an einer Befestigungsstelle eine Feder (10a, 10b) vorgesehen ist, die vorgespannt zwischen dem Zugmittel und der als fester Anschlag ausgebildeten Befestigungsstelle (12m, 12s) lagert,
**dadurch gekennzeichnet**, daß
das Zugmittel als sich im wesentlichen entlang des Scheibenhubes einsträngig erstreckendes Seil (1) ausgebildet ist, das
a) in zwei Abschnitte unterteilt ist, wobei jeder Abschnitt in formschlüssiger Verbindung mit der Seiltrommel (2) steht, und
b) zwischen zwei bezüglich der Türkarosserie ortsfesten Befestigungsstellen (11s, 12s; 11m, 12m) eingespannt ist, wobei die Befestigungsstellen (11s, 12s; 11m, 12m) der Seilabschnitte (1) an einer modularen Einheit (4; 9) der Fahrzeugtüre befestigt sind.

2. Fensterheber nach Anspruch 1, **dadurch gekennzeichnet**, daß die modulare Einheit eine Führungsschiene (4) ist, an dessen Enden die Befestigungsstellen (lls, 12s) vorgesehen sind.

3. Fensterheber nach Anspruch 2, **dadurch gekennzeichnet**, daß ein mit der Fensterscheibe (7) verbundener Mitnehmer (5) entlang des Verschiebeweges verschiebbar an der Führungsschiene (4) gelagert ist.

4. Fensterheber nach Anspruch 1, **dadurch gekennzeichnet**, daß die modulare Einheit ein Türmodul (9), ein Aggregateträger oder ein anderer in die Karosserie, insbesondere die Türkarosserie eines Kraftfahrzeuges, einzubauenden Träger ist.

5. Fensterheber nach einem der Ansprüche 1 bis 4, **dadurch gekennzeichnet**, daß die Feder als Druckfeder (10a, 10b) ausgebildet ist, wobei das mit der Befestigungsstelle (12m, 12s) verbundene Federende zwischen der Seiltrommel (2) und dem mit dem Ende des Seilabschnitts verbundenen Federende liegt.

6. Fensterheber nach einem der Ansprüche 1 bis 5, **gekennzeichnet durch** eine zweite, separate Antriebseinheit (6aa, 6bb) sowie ein zweites, separates zweigeteiltes Seil (1a, 1b), so daß ein zweisträngiger Fensterheber gebildet ist, und daß zur Ansteuerung der separaten Antriebseinheiten (6aa, 6bb) eine gemeinsame elektronische Steuereinheit (62) vorgesehen ist, mit der unterschiedlich große Hublängen bzw. Hubgeschwindigkeiten fahrbar sind.

## Claims

1. Motor-driven window lifter for motor vehicles consisting of a drive unit (6a,6b,6aa,6bb) fixed on the window pane substantially underneath the centre of gravity of the pane and having an electric motor and gearing wherein the gearing has a rotatable cable drum (2) which is in active connection with pulling means (la,lb) so that depending on the direction of rotation of the cable drum (2) the window pane is moved down or up with the drive unit along the displacement path, and that the pulling means are clamped between fixing points (11m,12m;11s,12s) locally fixed relative to the door body whereby a spring (10a,10b) is provided at at least one fixing point to compensate for lengthening of the cable and manufacturing tolerances whereby this spring is mounted pretensioned between the pulling means and the fixing point (12m,12s) which is formed as a fixed stop, characterised in that the pulling means are formed as a cable (1) extending as a single strand substantially along the lift path of the pane whereby the cable is
a) divided into two sections with each section in keyed connection with the cable drum (2), and
b) clamped between two fixing points (lls,12s;llm, 12m) locally fixed relative to the door body whereby the fixing points (11s,12s;11m,12m) of the cable sections (1) are fixed on a modular unit (4;9) of the vehicle door.

2. Window lifter according to claim 1 characterised in that the modular unit is a guide rail (4) and the fixing points (11s,12s) are provided at the ends of same.

3. Window lifter according to claim 2 characterised in that an entrainment member (5) connected to the window pane (7) is mounted on the guide rail (4) displaceable along the displacement path.

4. Window lifter according to claim 1 characterised in that the modular unit is a door module (9), an assembly support or another support which is to be installed in the bodywork, more particularly in the door body of a motor vehicle.

5. Window lifter according to one of claims 1 to 4 characterised in that the spring is formed as a compression spring (10a,10b) wherein the spring end connected to the fixing point (12m,12s) lies between the cable drum (2) and the spring end connected to the end of the cable section.

6. Window lifter according to one of claims 1 to 5 characterised by a second separate drive unit (6aa,6bb) as well as a second separate two-part cable (1a,1b) so that a double-strand window lifter is formed and that to control the separate drive units (6aa,6bb) a common electronic control unit (62) is provided with which different sized lift lengths and lift speeds can be moved.

## Revendications

1. Lève-vitre à entraînement motorisé pour véhicules automobiles, comprenant une unité d'entraînement (6a, 6b, 6aa, 6bb) comportant un moteur électrique et une transmission et fixée à la vitre, très largement au-dessous du centre de gravité de ladite vitre, la transmission présentant un tambour rotatif (2) à câble qui est en liaison opérante avec un moyen de traction (1a, 1b) de façon que la vitre soit animée d'un mouvement vers le bas ou vers le haut avec l'unité d'entraînement, le long du trajet de coulissement, en fonction du sens de rotation du tambour (2) à câble, et que le moyen de traction soit enserré entre des zones de fixation (11m, 12m ; 11s, 12s) stationnaires vis-à-vis de la carrosserie de la portière, un ressort (10a, 10b), prévu dans au moins une zone de fixation pour compenser des allongements du câble et des tolérances de fabrication, étant interposé, à l'état précontraint, entre le moyen de traction et la zone de fixation (12m, 12s) réalisée sous la forme d'une butée fixe,
caractérisé par le fait que
le moyen de traction est réalisé sous la forme d'un câble (1) qui s'étend, pour l'essentiel avec brin unique, le long de la course de la vitre,
a) est scindé en deux segments, chaque segment étant en liaison par concordance de formes avec le tambour (2) à câble, et
b) est enserré entre deux zones de fixation (11s, 12s ; 11m, 12m) stationnaires vis-à-vis de la carrosserie de la portière, les zones de fixation (11s, 12s ; 11m, 12m) des segments du câble (1) étant assujetties à un ensemble unitaire modulaire (4 ; 9) de la portière du véhicule.

2. Lève-vitre selon la revendication 1, caractérisé par le fait que l'ensemble unitaire modulaire est une glissière de guidage (4) aux extrémités de laquelle les zones de fixation (11s, 12s) sont prévues.

3. Lève-vitre selon la revendication 2, caractérisé par le fait qu'un organe d'entraînement (5), relié à la vitre (7), est monté sur la glissière de guidage (4) avec faculté de coulissement le long du trajet de coulissement.

4. Lève-vitre selon la revendication 1, caractérisé par le fait que l'ensemble unitaire modulaire est un module de portière (9), un support de groupes structurels ou un autre support conçu pour être intégré dans la carrosserie, en particulier la carrosserie de la portière d'un véhicule automobile.

5. Lève-vitre selon l'une des revendications 1 à 4, caractérisé par le fait que le ressort est réalisé sous la forme d'un ressort de pression (10a, 10b), l'extrémité du ressort, qui est reliée à la zone de fixation (12m, 12s), étant située entre le tambour (2) à câble et l'extrémité dudit ressort qui est reliée à l'extrémité du segment de câble.

6. Lève-vitre selon l'une des revendications 1 à 5, caractérisé par une seconde unité d'entraînement (6aa, 6bb) distincte, ainsi que par un second câble distinct (1a, 1b) scindé en deux parties, ce qui donne naissance à un lève-vitre à deux brins ; et par le fait qu'une unité de commande électronique (62) commune, autorisant respectivement des longueurs de course ou des vitesses de levage différemment grandes, est prévue pour l'activation des unités d'entraînement (6aa, 6bb) distinctes.
